# EUROPEAN PATENT APPLICATION

(11) **EP 4 661 281 A1**
(43) Date of publication of application: **10.12.2025**
(21) Application number: 25180560.2
(22) Date of filing: 03.06.2025
(51) Int. Cl.: H02P 6/17, G05B 19/042, H02P 29/024

(54) **BLDC MOTOR WITH INTERGATED MICROCONTROLLER FOR DATA ACQUISITION AND COMMUNICATION OVER SENSOR LINES**

(30) Priority: 04.06.2024 US 202418732989
(71) Applicant: DENTSPLY SIRONA Inc., York, PA 17401 (US)
(72) Inventor: TRAUTMANN, Daniel, 64625 Bensheim (DE)
(74) Representative: Aldridge, Henry Alexander

(57) **Abstract**

A brushless direct current motor system includes a brushless direct current motor including a plurality of sensors and corresponding sensor lines for transmitting signals from the plurality of sensors. A first microcontroller is configured to the signals from the sensor lines and control the motor based on the received signals. A second microcontroller is operatively connected to the sensor lines between the sensors and the first microcontroller, the second microcontroller being configured to save data in a memory based on signals from the sensors sent through the sensor lines.

## Description

### BACKGROUND

### Field of the Invention

Embodiments of the invention are directed to apparatuses, systems, and methods related to BLDC motors having integrated microcontrollers for data acquisition.

### Related Art

Brushless direct current (BLDC) motors have become integral components in a broad spectrum of devices. The absence of brushes and physical commutators in BLDC motors results in reduced friction and wear, enhancing reliability and lifespan of the motors. In consumer electronics, BLDC motors power everything from computer hard drives to cooling fans, offering quiet operation and energy efficiency. Home appliances, such as washing machines and refrigerators, benefit from the energy efficiency and low maintenance requirements of BLDC motors. The adaptability of BLDC motors is evident in industrial automation and robotics, where their precise control over speed and position significantly contributes to enhanced productivity.

BLDC motors find extensive applications in dental equipment, including milling machines, where precision and reliability are paramount. In dental milling machines, BLDC motors are employed to drive the cutting tools with accuracy, ensuring precise milling of dental restorations such as crowns and bridges. The electronic commutation in BLDC motors enables fine control over rotational speed and torque, which are crucial for achieving intricate details in dental prosthetics. The absence of brushes and the associated wear in BLDC motors enhances the durability of milling machines, resulting in consistent and reliable performance over extended periods. Moreover, the compact design of BLDC motors allows for efficient integration into the limited space of dental equipment.

An issue with conventional BLDC motors when integrated in devices is that the relatively simple design of the motors does not provide for easy identification of one BLDC motor from another BLDC motor in terms of how each BLDC motor has been used. For example, when a BLDC motor is defective, removed from the machine system in which it has been used, and then sent to another location for analysis, little may be ascertained during the analysis as to the life cycle of the BLDC. It would be useful if data such as the total amount of time the BLDC was operating could be readily determined in the analysis of a defective BLDC.

### SUMMARY OF THE INVENTION

According to one embodiment of the invention, a brushless direct current motor system includes a brushless direct current motor having a plurality of sensors and corresponding sensor lines for transmitting signals from the plurality of sensors. A first microcontroller is configured to receive the signals from the sensor lines and control the motor based on the received signals. A second microcontroller is operatively connected to the sensor lines between the sensors and the first microcontroller, the second microcontroller being configured to save data in a memory based on signals from the sensors sent through the sensor lines. The second microcontroller is capable of being set in (i) a data transmission mode in which the second microcontroller sends the saved data through the sensor lines and (ii) a transparent mode in which the second microcontroller does not send the saved data through the sensor lines.

According to another embodiment of the invention, a method is provided for monitoring a brushless direct current motor system that includes a first microcontroller for controlling a brushless direct current motor. The method includes providing a second microcontroller operatively connected to sensor lines between sensors and the first microcontroller, saving in a memory of the second microcontroller data regarding signals received by the second microcontroller through the sensor lines, and transmitting the data saved in the memory of the second microcontroller when the motor is not operating.

### BRIEF DESCRIPTION OF THE DRAWINGS

FIG. 1 is a schematic diagram of a conventional BLDC system.
FIG. 2 is a schematic diagram of a BLDC system according to embodiments of the invention.
FIG. 3 is a schematic diagram of a BLDC system according to further embodiments of the invention.

### DETAILED DESCRIPTION OF THE INVENTION

Embodiments of the invention will now be described. The embodiments include apparatuses, systems, and methods in which a BLDC motor includes a microcontroller for data acquisition and serial communication integrated with sensor lines.

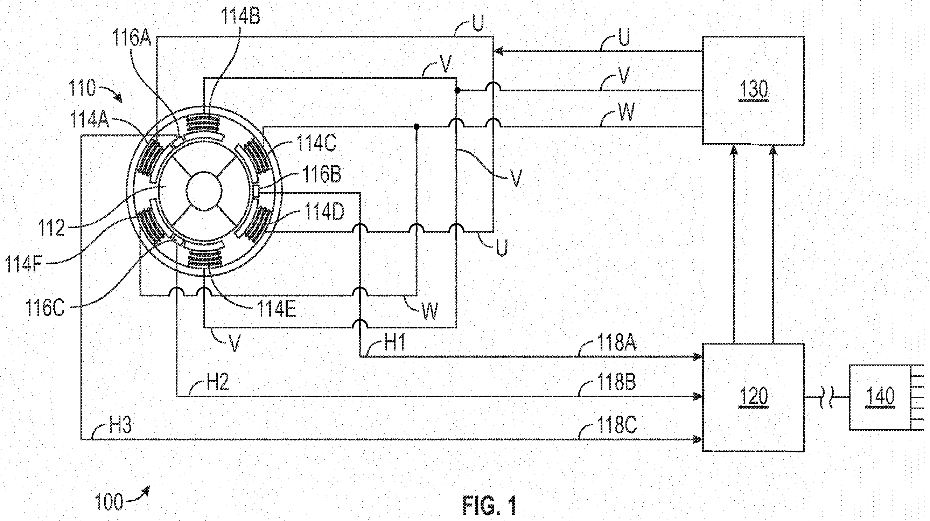

Figure 1 is a schematic diagram of a conventional BLDC motor system 100. The motor system 100 includes a BLDC motor 110, a motor microcontroller 120, and a driver 130. An overview of the functions and configurations of these components in the motor system 100 will now be given. Those skilled in the art will appreciate the omitted details of the motor system 100 as well as alternatives to the depicted configuration that would provide for a BLDC motor system.

The motor 110 includes a rotor 112 and a stator 114A-114F. The rotor 112 includes permanent magnets arranged in a configuration that is designed to interact with the changing magnetic field generated by the stator 114A-114F. The stator 114A-114F is the stationary part of the motor 110 that houses electrical windings. The windings of the stator 114A-114F generate a shifting magnetic field that induces forces on the magnets of the rotor 112 to thereby make the rotor 112 rotate. The rotational force emanating from the rotor 112 is applied to the components of the device in which the BLDC motor system 100 is integrated.

The driver 130 is an electronic circuit integrated (operatively connected) with the motor microcontroller 120. The driver 130 generates precise commutation signals U, V, W to energize the windings of the stator 114A-114E. These signals dictate the timing and sequence of the current flow through the windings, creating the rotating magnetic field that interacts with the magnets of the rotor 112. This interaction results in the continuous rotation of the rotor 112.

The accuracy and synchronization of the commutation signals U, V, W are determined by feedback from sensors 116A-116C that detect the positioning of the rotor 112. In some embodiments of the invention, the position sensors 116A-116C are Hall sensors. A Hall sensor is a transducer that detects the presence of a magnetic field by utilizing the Hall effect, which is the generation of a voltage difference across a conductor perpendicular to both the direction of an applied magnetic field and the direction of current flow within the conductor. With the positioning of the Hall effect sensors 116-116C about the rotor 112, the sensors 116A-116C are exposed to the changing magnetic field generated by the permanent magnets in the rotor 112. When the rotor 112 rotates, it alters the magnetic field sensed by the Hall effect sensors 116A-116C, causing the sensors 116A-116C to produce electrical signals H1, H2, H3. The signals H1, H2, H3 are then sent to the motor microcontroller 120 along the Hall sensor lines 118A, 118B, 118C. And from the signals H1, H2, and H3, the motor microcontroller 120 can determine the precise position of the rotor 112.

Those skilled in the art will recognize alternative forms of rotor position detecting sensors that can be used in other embodiments of the invention described herein. For example, in some embodiments the position detecting sensors for the BLDC motor system are in the form of magnetic encoders. Such magnetic encoders can sense the positioning of the rotor and generate corresponding positioning signals, which are sent along sensor lines in the same manner that the positioning signals from Hall sensors are sent along the sensor lines. An example of BLDC motor system that uses magnetic encoders can be seen in U.S. Patent Application Pub. No. 2019/0089234, which is incorporated herein by reference in its entirety. Thus, embodiments of the invention are not limited to having Hall sensors. Nevertheless, for ease of description, the following descriptions will be made with respect to BLDC motors systems that use Hall sensors.

It should be noted that the "lines" described herein refer to the electrical connections that carry electrical signals between the components of the BLDC motor systems. The signals are, for example, analog signals from sensors such as the Hall sensors, serial protocol interface (SPI) signals sent from the first microcontroller to the driver and output from the second microcontroller, and pulse width modulation (PWM) signals used to control power in the system.

The motor microcontroller 120 is responsible for the overall control of the motor system 100. The motor microcontroller 120 manages the sequence of the commutation signals U, V, W, that are sent from the driver 130 to the brushless motor 110, monitors the signals H1, H2, and H3 from the Hall sensors 116A-116C, and adjusts the power based on the monitored signals to the motor to achieve the desired speed and torque. In effect, the motor microcontroller 120 ensures that the motor system 100 operates smoothly and efficiently during motion.

The motor microcontroller 120 is connected to the wiring harness 140 that is used to connect the BLDC motor system 200 to the device in which the BLDC motor system is embedded. As will be appreciated by those skilled in the art, the wiring harness 140 comprises insulated wires and connectors that link the BLDC motor system 200 to other relevant components within the device. Typically, the wiring harness includes power supply lines, ground connections, and signal lines carrying information. The wiring harness 140 serves as the communication conduit between the BLDC motor system 200 and the device.

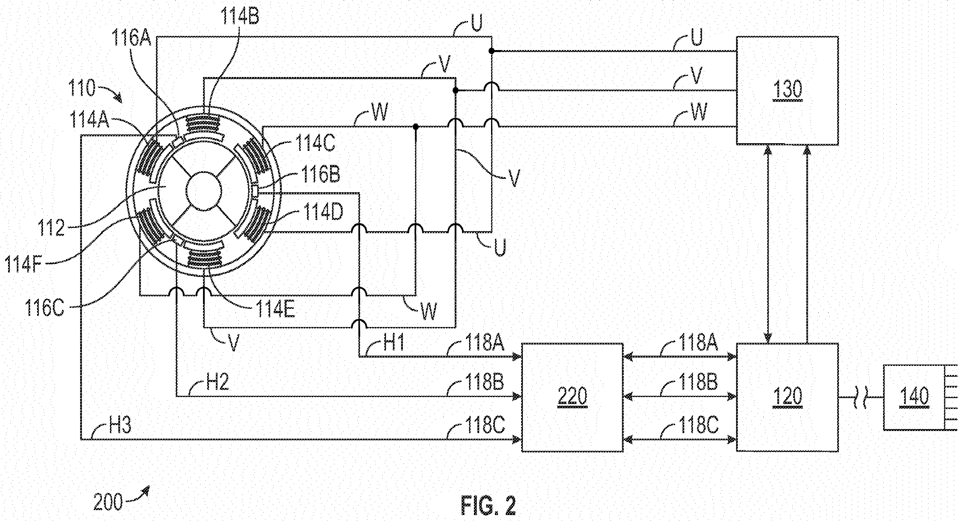

Figure 2 is a schematic diagram of a BLDC motor system 200 according to embodiments of the invention. The BLDC motor system 200 depicted in Figure 2 includes the components of the BLDC motor system 100 depicted in Figure 1, and, thus, the description of those components with respect to Figure 2 will be omitted.

In comparison to the BLDC motor system 100, the BLDC motor system further includes a second microcontroller 220 in addition to the (first) motor microcontroller 120. As will be described below, the second microcontroller 220 functions to monitor the Hall sensor signals H1, H2, H3 when the BLDC motor 110 is operating and to output data when the BLDC motor 110 is stopped.

The second microcontroller 220 may be mounted on the same circuit board (PCB) as the motor microcontroller 120. The second microcontroller 220 includes a processor and a memory. Input ports of the second microcontroller 220 are connected to the wiring forming the Hall sensor lines 118A, 118B, 11C. The microcontroller 220 can thereby actively monitor the Hall sensor signals H1, H2, H3 and record data regarding the monitored signals. More specifically the processor of the second microcontroller to store data regarding Hall sensor signals H1, H2, H3 into its memory. This structured interaction allows the second microcontroller 220 to effectively record and store data from the received Hall sensor signals H1, H2, H3 in its memory, and the data may subsequently be retrieved from the second microcontroller's memory.

Examples of information from the Hall sensor signals H1, H2, and H3 that may be saved in the second microcontroller's memory includes the total amount of time that the BLDC motor 110 has been operating (i.e., "runtime"), the speed at which the BLDC motor 110 has been operated, usage patterns of the BLDC motor 110 such as lengths of time that the BLDC motor 110 operates compared to the lengths of time between operations of the BLDC motor 110. Those skilled in the art will recognize other times of data from the Hall sensor signals H1, H2, H3 that could be saved in the memory of the second microcontroller 220.

Further information about the BLDC motor system 200 may be saved in the memory of the second microcontroller 220. For example, information regarding one or more serial numbers for the BLDC motor system 200 and/or components of the BLDC motor system 200, part numbers, production time stamps, manufactures/suppliers related to components of the BLDC motor system 200, and motor parameters may be saved in the memory. Such data can be useful when performing an analysis of the BLDC motor system 200, as will be described below.

The second microcontroller 220 may be programmed in conjunction with the (first) motor microcontroller 110 such that the second microcontroller 220 is set in different modes depending on the operating status of the BLDC motor 110.

When the BLDC motor 110 is operating, the second microcontroller 220 is set in a transparent mode. In this mode, the second microcontroller 220 receives the Hall sensor signals H1, H2, H3 from the Hall sensors 116A-116C and records data based on the signals H1, H2, H3. The signals H1, H2, H3 output from the second microcontroller 220 and sent to the motor microcontroller 120. As such, the motor microcontroller 120 continues to perform overall control of the motor system 100.

When the BLDC motor 110 is not operating, *i.e.,* the rotor 112 is stopped, the second microcontroller 220 can be set in a data transmission mode. In this mode, the second microcontroller 220 can transmit data stored in its memory to the motor microcontroller 120. The data may can sent using the Hall signal transmission lines 118A, 118B, 118C between the second microcontroller 220 and the motor microcontroller 120. Also while in the data transmission mode, the data can be output from the motor microcontroller 120 to outside of the BLDC motor system 200 using the wiring harness 140 that is connected to the motor microcontroller 120. Thus, data on the operation of the BLDC motor 110 can easily be retrieved for analysis.

Those skilled in the art will appreciate the numerous types of useful data that can be stored in the memory of the second microcontroller 220. Such data could be related to operation of the BLDC motor 110 that is derived from the Hall sensor signals H1, H2, H3, such as the speeds that the BLDC motor 110 has been operated at and the amount of time that the BLDC motor 110 has been operated. In addition, other information related to the BLDC motor 110 could be stored in the memory of the second microcontroller, such as serial/part number(s) for the BLDC motor 110, production time stamps, manufacturer/supplier information, motor parameters, and serial number(s) of device(s) in which the BLDC motor 110 is used.

Also when the BLDC motor 110 is not operating, the first microcontroller 120 and the second microcontroller 220 can be set to a programming mode. In this mode, the second microcontroller can receive programming instructions from one or more of the Hall signal transmission lines 118A, 11B, 118C between the second microcontroller 220 and the motor microcontroller 120. For example, the firmware of the second microcontroller 220 can be initial sent to, or updated, when the second microcontroller 220 is in the programming mode.

The second microcontroller 220 can be further programmed to support other aspects related to the operation of the BLDC motor 110. For example, when the BLDC motor 110 is first integrated with a device, a calibration process may be needed to ensure that the BLDC motor 110 and device are operating properly. In such a case, the device may request a new calibration after detecting that the BLDC motor 110 has been change (e.g., based on a serial number of the motor). To further facilitate the calibration, the second microcontroller 220 can be programmed to provide a calibration prompt to the device to thereby alert a user that the device needs to be calibrated with the new BLDC motor 110.

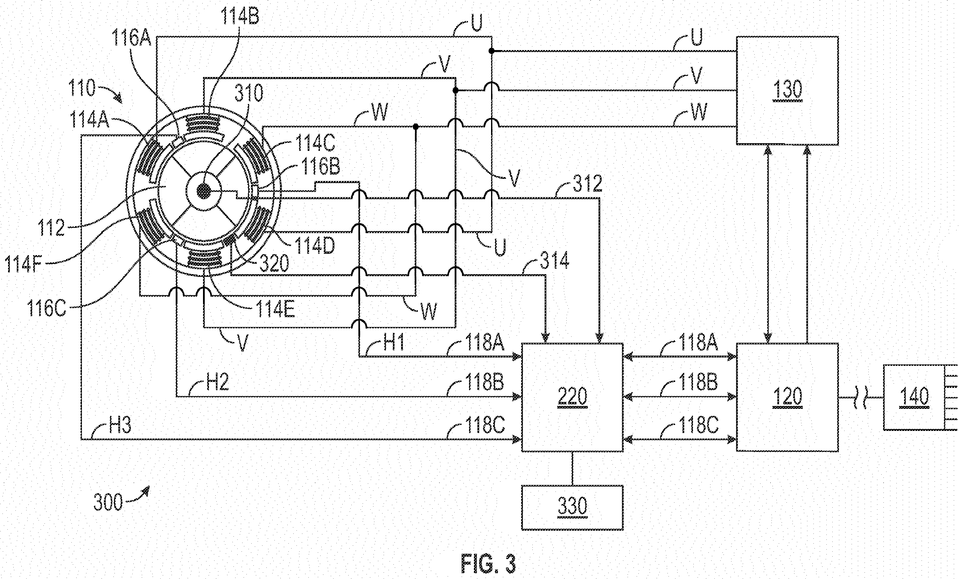

Figure 3 is a schematic diagram of a BLDC motor system 300 according to further embodiments of the invention. The motor system 300 in this embodiment includes features of the BLDC motor system 200 described above, and, thus, descriptions of the same features will be omitted.

The BLDC motor system 300 includes additional sensors to monitor aspects of the BLDC motor 110, with data from the sensors being fed to the second microcontroller 220. Specific examples of sensors will be described, but those skilled in the art will recognize further examples of sensors that can be integrated with the BLDC motor systems as described herein.

A force sensor 310 is integrated in the BLDC motor 110 for measuring a force acting on the motor. In embodiments of the invention, the sensor 310 could detect at least one of an axial force and a torque on the motor. In this case, the force sensor 310 is mounted to the shaft of motor, but those skilled in the art will appreciate different forms of sensors that could alternatively be used. Data from the force sensor 310 is sent by way of a signal line 312 to the second microcontroller 220. The data received from the force sensor 310 can be saved in the memory of the second microcontroller 220, *e.g.,* when the second microcontroller 220 is operating in the transparent mode as described above. More specifically, analog values of the force sensor measurement can be evaluated by an analog-to-digital (AD) converter in the second microcontroller 220. The saved data from the force sensor 310 can be transmitted from the second microcontroller 220, *e.g.,* when the second microcontroller 220 is operating in the data transmission mode as described above.

The BLDC motor system 300 also includes a further sensor 320 be configured to detect aspects of the operating BLDC motor 110. Data from the sensor 320 is by way of a signal line 314 to the second microcontroller 220. The data received from the sensor 320 can be saved in the memory of the second microcontroller 220, *e.g.,* when the second microcontroller 220 is operating in the transparent mode as described above. The saved data from the sensor 320 can be transmitted from the second microcontroller 220, *e.g.,* when the second microcontroller 220 is operating in the data transmission mode as described above.

The sensor 320 could take a variety of forms. In some embodiments, the sensor 320 detects the temperature of the BLDC motor 110. Thus, temperature sensor data may be saved in the memory of the second microcontroller 220. In other embodiments, the sensor 320 is a vibration sensor that detects vibration in the BLDC motor 110 as it operates. The vibration data thereby saved in the memory of the second microcontroller could be used, for example, to analyze wear on bearings in the BLDC motor 110.

It should be noted that in further embodiments of the invention, the BLDC motor system is provided with one or more further sensors in addition to sensors 310 and 320. For example, the BLDC motor system may include the combination of axial force, torque, temperature and vibration sensors. In still other embodiments, the BLDC motor system can include further sensors in addition to the axial force, torque, temperature and vibration sensors, and all of the sensors may be operatively connected to the second microcontroller.

The second microcontroller 220 can thereby provide useful data from the sensors 310 and 320 for analysis. Further, the second microcontroller 220 can be programed to provide additional functionalities in conjunction with the data received from the sensors 310 and 320. For example, the second microcontroller 220 can be programmed to monitor sensor data when the BLDC motor 110 is operated and interrupt the operation if faulty operation is detected. Specific examples of such monitoring and interruption would be setting limits on the axial force and/or torque applied to and temperature of the BLDC motor 110 and programming the second microcontroller 220 to send a signal to the first microcontroller 120 to stop operation of the BLDC motor 110 if one of the limits is exceeded. And such events can be noted and saved in the memory of the second microcontroller 220 for subsequent analysis.

The embodiment depicted in Figure 3 further comprises a debugging interface 330 connected to the second microcontroller 220. The debugging interface 330 allows for monitoring and debugging of the operation of the second microcontroller 220 in real-time. In embodiments of the invention, the debugging interface 330 is removably connectable to the BLDC system 300, e.g., though a port provided to the system. Those skilled in the art will understand the variety of forms that a debugging interface may take.

As will be appreciated by those skilled in the art, a second microcontroller as described herein can be easily integrated into BLDC motor system designs. This is because the second microcontroller is connected to the Hall sensor signal lines that already designed into BLDC motor systems. And those skilled in the art will appreciate the usefulness of the information that may be obtained from the second microcontroller. As discussed above, information regarding the total amount of time that the BLDC motor has operated, the speeds at which the BLDC motor has operated, usage patterns of the BLDC motor, axial force and/or torque on the BLDC motor, and operating temperatures of the BLDC motor may be analyzed using the information stored in the second microcontroller. Such information would be helpful, for example, when a defective BLDC motor is returned to a manufacturer. As another example, such information could be used to train models used for predicting the life cycles and maintenance requirements of the BLDC motor.

As BLDC motors are found in numerous devices, the BLDC motor systems described herein have wide applicability. As but one example, BLDC motor systems according to embodiments of the invention may be embedded in a dental milling machine. The BLDC motor in a dental milling machine rotates the cutting tool with precision. When a dental milling machine includes a BLDC motor system as described herein, and then if there is a fault with the BLDC motor, the data stored in the second microcontroller can be analyzed in an attempt to determine the cause of the fault.

It should be noted that the BLDC motor systems are described and depicted herein with specific configurations, there are numerous alternative configurations that would be included in embodiments of the invention. For example, the depicted embodiments are configured such that the rotor is positioned inside of the stator. In a well-known alternative BLDC configuration, the rotor may be positioned outside of the stator. As other examples, some embodiments of the invention could be three-phase BLDC motors.

The foregoing description, for purpose of explanation, has been described with reference to specific implementations. However, the illustrative discussions above are not intended to be exhaustive or to limit the invention to the precise forms disclosed. Many modifications and variations are possible in view of the above teachings. The implementations described herein were chosen and described in order to best explain the principles of embodiments of the invention and its practical applications, to thereby enable others skilled in the art to best utilize embodiments of the invention and various implementations with various modifications as are suited to the particular use contemplated.

## Claims

1. A brushless direct current motor system comprising:
a brushless direct current motor including a plurality of sensors and corresponding sensor lines for transmitting signals from the plurality of sensors;
a first microcontroller configured to receive the signals from the sensor lines and control the motor based on the received signals; and
a second microcontroller operatively connected to the sensor lines between the sensors and the first microcontroller, the second microcontroller being configured to save data in a memory based on signals from the sensors sent through the sensor lines.

2. The brushless direct current motor system according to claim 1, wherein the plurality of sensors is one of Hall sensors and magnetic encoders.

3. The brushless direct current motor system according to claim 1 or claim 2, wherein the second microcontroller is capable of being set in (i) a data transmission mode in which the second microcontroller sends the saved data through the sensor lines and (ii) a transparent mode in which the second microcontroller does not send the saved data through the sensor lines.

4. The brushless direct current motor system according to claim 1 or claim 2, further comprising a force sensor for measuring at least one of axial force and torque on the motor, the force sensor being operatively connected to the second microcontroller such that the second microcontroller can save data regarding the measured force received from the force sensor in the memory.

5. The brushless direct current motor system according to claim 4, wherein the second microcontroller is configured to monitor whether the measured force exceeds a limit, and the second microcontroller sends a signal to the first microcontroller to stop operation of the motor if the measured force exceeds the limit.

6. The brushless direct current motor system according to claim 1 or claim 2, further comprising a temperature sensor for measuring a temperature of the motor, the temperature sensor being operatively connected to the second microcontroller such that the second microcontroller can save temperature data received from the temperature sensor in the memory.

7. (Original) The brushless direct current motor system according to claim 6, wherein the second microcontroller is configured to monitor whether the measured temperature exceeds a limit, and the second microcontroller sends a signal to the first microcontroller to stop operation of the motor if the measured temperature exceeds the limit.

8. The brushless direct current motor system according to claim 1 or claim 2, further comprising a vibration sensor for measuring vibrations in the motor, the vibration sensor being operatively connected to the second microcontroller such that the second microcontroller can save vibration data received from the vibration sensor in the memory.

9. The brushless direct current motor system according to claim 1 or claim 2, wherein the second microcontroller is configured to receive instructions for programming the second microcontroller through the sensor lines.

10. The brushless direct current motor system according to claim 1 or claim 2, further comprising a driver operatively connected to the first microcontroller and the motor,
wherein the driver is controlled by the first microcontroller and sends commutation signals to the motor based on the control by the first microcontroller.

11. The brushless direct current motor system according to claim 1 or claim 2, wherein the data saved by the second microcontroller includes at least one of runtime and speed of the motor.

12. A dental milling machine comprising the brushless direct current motor system of claim 1.

13. A method of monitoring a brushless direct current motor system that includes a first microcontroller for controlling a brushless direct current motor and a second microcontroller operatively connected to sensor lines between sensors and the first microcontroller, the method comprising:
saving in a memory of the second microcontroller data regarding signals received by the second microcontroller through the sensor lines, and
transmitting the data saved in the memory of the second microcontroller when the motor is not operating.

14. The method according to claim 13, wherein the plurality of sensors is one of Hall sensors and magnetic encoders.

15. The method according to claim 13 or claim 14, further comprising:
transmitting data from a force sensor that measures a force on the motor to the second microcontroller, with the force being axial force or torque on the motor; or
transmitting data from a temperature sensor that measures a temperature of the motor; or
transmitting data from a vibration sensor that measures vibrations in the motor.
